Europäisches Patentamt

(19) European Patent Office

Office européen des brevets

(11) EP 0 910 070 A2

(12) **EUROPEAN PATENT APPLICATION**

(43) Date of publication:
21.04.1999 Bulletin 1999/16

(51) Int. Cl.⁶: $G11B\ 7/09$, $G11B\ 7/135$, $G11B\ 7/13$

(21) Application number: 98111085.1

(22) Date of filing: 17.06.1998

(84) Designated Contracting States:
AT BE CH CY DE DK ES FI FR GB GR IE IT LI LU
MC NL PT SE
Designated Extension States:
AL LT LV MK RO SI

(30) Priority: 24.09.1997 JP 258957/97
16.12.1997 JP 346776/97

(71) Applicant: FUJITSU LIMITED
Kawasaki-shi, Kanagawa 211-8588 (JP)

(72) Inventors:
• Tezuka, Koichi
Nakahara-ku, Kawasaki-shi, Kanagawa 211 (JP)
• Uno, Kazushi
Nakahara-ku, Kawasaki-shi, Kanagawa 211 (JP)

(74) Representative:
Seeger, Wolfgang, Dipl.-Phys.
Georg-Hager-Strasse 40
81369 München (DE)

(54) **Optical information recording/reproducing apparatus**

(57) An optical information recording/reproducing apparatus which detects a focal error signal, a tracking error signal and a optical signal based on a reflected light beam from a recording medium is constructed so that the analyzer splits the reflected light beam into two polarized light beams, the optical element includes a plurality of deflecting parts spatially splitting each of the two split light beams from the analyzer into three light beams, the photodetector includes light receiving elements which receive six divided light beams deflected via the optical element, and the six divided light beams are used to detect the focal error signal, the tracking error signal, and the optical signal.

FIG. 7

**Description**

BACKGROUND OF THE INVENTION

The present invention generally relates to optical information recording/reproducing apparatuses, and more particularly to an optical information recording/reproducing apparatus which records an optical recording signal on and/or reproduces a optical recording signal from an optical recording medium by irradiating a laser beam on the optical recording medium while carrying out a tracking control and a focus control.

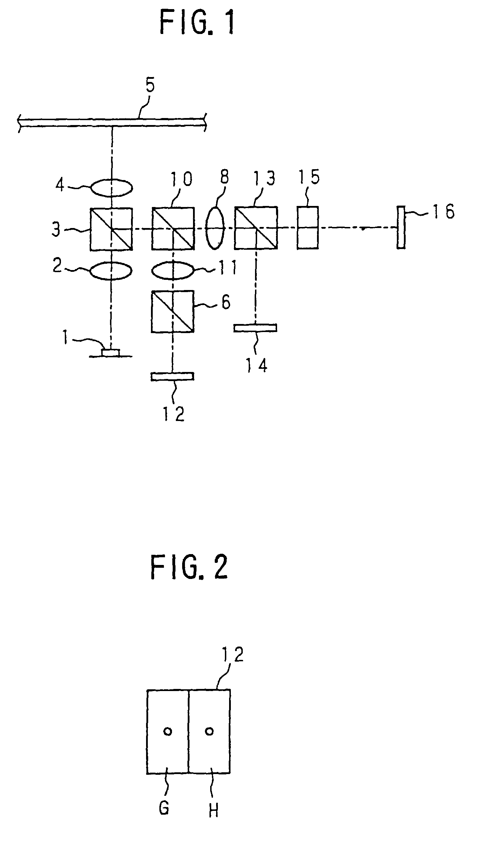

FIG.1 is a diagram showing an important part of a conventional magneto-optic recording/reproducing apparatus, more particularly, the construction of a magneto-optic head unit. As shown in FIG.1, the magneto-optic head unit is arranged below a magneto-optic disk 5. A laser beam emitted from a laser diode 1 which is provided as a coherent light source of the magneto-optic head unit is converted into parallel rays by a collimator lens 2 and is supplied to a first beam splitter 3. The laser beam transmitted through the first beam splitter 3 is converged on a magnetic layer of the magneto-optic disk 5 via an objective lens 4. The laser beam converted on the magneto-optic disk 5 is reflected by the magneto-optic disk 5, and is supplied again to the first beam splitter 3. The reflected light beam is reflected by the first beam splitter 3, and is supplied to a second beam splitter 10 where the reflected light beam is split into a light beam transmitted through the second beam splitter 10 and a light beam which is reflected by the second beam splitter 10 and used for reproducing a magneto-optic signal.

The light beam reflected by the second beam splitter 10 and used for reproducing the magneto-optic signal is converged by a condenser lens 11, and is supplied to a Wollaston prism 6 which is provided as an analyzer. The Wollaston prism 6 splits the light beam into approximately two equal parts which are irradiated on a first 2-part photodetector 12 to form two beam spots thereon.

FIG.2 is a plan view showing the first 2-part photodetector 12. The light beam reflected by the magneto-optic disk 5 receives a rotational action of a polarization plane depending on a direction of a magnetic domain of the magnetic layer. For this reason, the Wollaston prism 6 is cut along an appropriate angle with respect to a crystal axis, so that a linear polarization subject to the extremely small rotation is split into two approximately equally. The light beam is split into two polarized light beams by the Wollaston prism 6, and the two light beams form beam spots on the 2-part photodetector 12 as shown in FIG.2. Outputs G and H corresponding to the beam spots are obtained from two photodetector parts of the 2-part photodetector. A magneto-optic signal MO can be obtained from the following formula.

$$MO = G - H$$

On the other hand, the light beam transmitted through the second beam splitter 10 is supplied to a third beam splitter 13 via a condenser lens 8. Hence, the light beam supplied to the third beam splitter 13 is split into a light beam which is irradiated on a second 2-part photodetector 14 for obtaining a tracking error signal, and a light beam which is supplied via a tapered prism 15 to a third 4-part photodetector 16 for obtaining a focal error signal according to the Foucault technique.

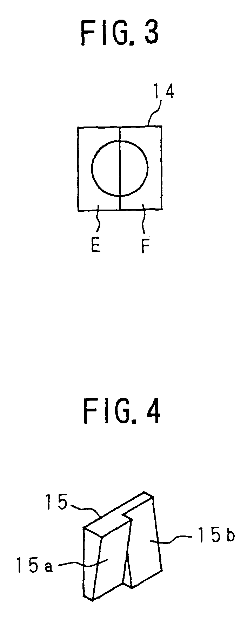

FIG.3 is a plan view showing the second 2-part photodetector 14. When a beam split is formed on the second 2-part photodetector 14, outputs E and F are output from two photodetector parts of the second 2-part photodetector 14. A tracking error signal TES can be obtained from the following formula.

$$TES = E - F$$

FIG.4 is a perspective view showing the structure of the tapered prism 15. The tapered prism 15 has two tapered parts 15a and 15b having mutually different inclinations or tapers with respect to an optical axis of an incoming light beam. The tapered parts 15a and 15b are provided side by side on one side of the tapered prism 15. The light beam supplied to the tapered prism 15 is split into two light beams by the tapered parts 15a and 15b, and the two light beams are irradiated on the third 4-part photodetector 16.

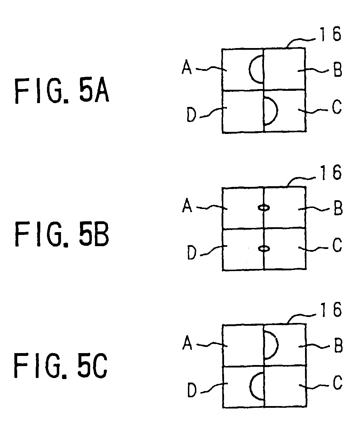

FIGS.5A through 5C respectively are plan views showing the third 4-part photodetector 16. FIG.5A shows a case where the objective lens 4 and the magneto-optic disk 5 are close to each other, FIG.5B shows a case where the laser beam is in focus on the magneto-optic disk 5, and FIG.5C shows a case where the objective lens 4 and the magneto-optic disk 5 are far away from each other. Two beam spots are formed on the third 4-part photodetector 16 by the two light beams, and outputs A, B, C and D are output from photodetector parts of the third 4-part photodetector 16. A focal error signal FES can be obtained by the following formula.

$$FES = (A + C) - (B + D)$$

In the optical information recording/reproducing apparatus having the magneto-optic head unit having the construction described above, the magneto-optic signal MO is detected by making the laser beam follow a predetermined track on the magneto-optic disk 5 based on the tracking error signal TES while controlling the focal error signal FES to becomes FES=0 so that the laser beam is constantly in-focus on the magneto-optic disk 5. As described above, the conventional magneto-optic head unit required two beam splitters and three photodetectors in order to detect the focal error signal FES, the tracking error signal TES and the magneto-optic signal MO.

Therefore, according to the conventional optical information recording/reproducing apparatus, the number of parts forming the magneto-optic head unit, such as the optical elements and the photodetectors, is large. As a result, there were problems in that it is troublesome to adjust the arrangements of these parts, and the process of producing the optical information recording/reproducing apparatus becomes complex, thereby increasing the cost of the optical information recording/reproducing apparatus.

In order to solve these problems, an apparatus which detects a focal error signal, a tracking error signal and a magneto-optic signal by splitting a reflected light beam from an optical recording medium into nine light beams and irradiating the nine light beams on a single photodetector was previously proposed in a Japanese Laid-Open Patent Application No.7-73479. According to this proposed apparatus, the number of parts forming the apparatus is reduced, and the process of producing the apparatus is simplified, thereby also reducing the cost of the apparatus.

However, when the reflected light beam is split into a large number of light beams, the number of photodetector parts forming the photodetector becomes large, and a noise component included in the signals output from the photodetector parts becomes large. For this reason, there was a possibility of the signal quality deteriorating due to the noise component. In addition, because the external shape and size of the photodetector become large when the photodetector is made up of a large number of photodetector parts, there was a problem in that the size of both the magneto-optic head unit and the optical information recording/reproducing apparatus increases. Furthermore, when the external size and shape of the photodetector becomes large, a package of the photodetector becomes large, and a special package may be required, thereby introducing another problem in that the cost of the photodetector package increases.

SUMMARY OF THE INVENTION

Accordingly, it is a general object of the present invention to provide a novel and useful optical information recording/reproducing apparatus in which the problems described above are eliminated.

Another and more specific object of the present invention to provide an optical information recording/reproducing apparatus which can reduce the number of photodetector parts and the number of photodetectors forming a photodetector unit and reduce noise in output signals of the photodetector unit, and can reduce the size and cost of the optical information recording/reproducing apparatus by making the external shape and size of the photodetector unit relatively small, without sacrificing the accuracy of the focal error signal, the tracking error signal and the optical signal which are detected.

Still another object of the present invention is to provide an optical information recording/reproducing apparatus which receives by a photodetector via an analyzer and an optical element a reflected light beam of a coherent light beam projected on a recording medium, and detects a focal error signal for controlling a projecting position of the coherent light beam, a tracking error signal, and information for reproducing a optical signal, wherein the analyzer splits the reflected light beam into two polarized light beams, the optical element includes a plurality of deflecting parts spatially splitting each of the two split light beams from the analyzer into three light beams, the photodetector includes light receiving elements which receive six divided light beams deflected via the optical element, the six divided light beams being used to detect the focal error signal, the tracking error signal, and the optical signal. According to the optical information recording/reproducing apparatus of the present invention, the reflected light beam from the recording medium is split into two polarized light beams, and each of the two polarized light beams is further spatially split into three light beams. A total of six light beams obtained in this manner are irradiated on the photodetector. For this reason, it is possible to detect the optical signal, the tracking error signal and the focal error signal using a single photodetector.

A further object of the present invention is to provide an optical information recording/reproducing apparatus recited in claim 10 which records information on and/or reproduces information from an optical recording medium based on a reflected light beam from the optical recording medium, comprising a light splitting part having a plurality of light splitting stages which split the reflected light beam from the optical recording medium into a plurality of light beams, and a photodetector unit including n photodetectors which receive m light beams output from a final stage of the light splitting part, where m and n are positive integers satisfying m ≥ n, the n photodetectors of the photodetector unit including a plurality of photodetectors which are arranged to receive light beams used to detect a focal error, at least one photodetector which is arranged to receive a light beam used to detect a tracking error, and a plurality of photodetectors which are arranged to receive light beams used to detect optical information recorded on the optical recording medium. According to the optical information recording/reproducing apparatus of the present invention, it is possible to obtain an accurate focal error signal by making a tolerable margin of a focal error detection system large with respect to the above described elements causing the error. In addition, it is possible to also obtain a focal error signal, a tracking error signal and a optical signal having a high signal quality.

Therefore, according to the present invention, it is possible to realize an optical information recording/reproducing apparatus which can reduce the number of photodetector parts and the number of photodetectors forming a photodetector unit and reduce noise in output signals of the photodetector unit, and can reduce the size and cost of the optical information recording/reproducing apparatus by making the external shape and size of the photodetector unit relatively small, without sacrificing the accuracy of the focal error signal, the tracking error signal and the optical signal which are detected.

Other objects and further features of the present invention will be apparent from the following detailed description when read in conjunction with the accompanying drawings.

BRIEF DESCRIPTION OF THE DRAWINGS

FIG.1 is a diagram showing the construction of a conventional magneto-optic head unit;

FIG.2 is a plan view showing a first 2-part photodetector shown in FIG.1;

FIG.3 is a plan view showing a second 2-part photodetector shown in FIG.1;

FIG.4 is a perspective view showing the structure of a tapered prism shown in FIG.1;

FIGS.5A through 5C respectively are plan views showing a third 4-part photodetector shown in FIG.1;

FIG.6 is a diagram showing the construction of a first embodiment of an optical information recording/reproducing apparatus according to the present invention;

FIG.7 is a perspective view showing an important part of the first embodiment;

FIG.8 is a plan view showing a photodetector unit of the first embodiment for a case where an objective lens and a magneto-optic disk are close to each other;

FIG.9 is a plan view showing the photodetector unit of the first embodiment for a case where a laser beam is in-focus on the magneto-optic disk;

FIG.10 is a plan view showing the photodetector unit of the first embodiment for a case where the objective lens and the magneto-optic disk are far away from each other;

FIGS.11A through 11C respectively are diagrams for explaining a shape of a beam spot of a split light beam;

FIG.12 is a plan view showing the photodetector unit at a high temperature;

FIG.13 is a plan view showing a photodetector unit of a second embodiment of the optical information recording/reproducing apparatus according to the present invention;

FIG.14 is a plan view showing a photodetector unit of a third embodiment of the optical information recording/reproducing apparatus according to the present invention;

FIG.15 is a perspective view showing an important part of a fourth embodiment of the optical information recording/reproducing apparatus according to the present invention;

FIG.16 is a perspective view showing a composite prism of the fourth embodiment;

FIG.17 is a plan view showing a photodetector unit of the fourth embodiment;

FIG.18 is a perspective vie showing an embodiment of the composite prism;

FIG.19 is a perspective view showing an important part of a fifth embodiment of the optical information recording/reproducing apparatus according to the present invention;

FIG.20 is a perspective view showing an important part of a sixth embodiment of the optical information recording/reproducing apparatus according to the present invention;

FIG.21 is a perspective view showing an important part of a seventh embodiment of the optical information recording/reproducing apparatus according to the present invention;

FIG.22 is a diagram showing a circuit structure for calculating a focal error signal in the first embodiment;

FIG.23 is a diagram showing a circuit structure for calculating a tracking error signal in the first embodiment;

FIG.24 is a diagram showing a circuit structure for calculating a magneto-optic signal in the first embodiment;

FIG.25 is a diagram showing a circuit structure for calculating an identification signal in the first embodiment;

FIG.26 is a diagram showing another circuit structure for calculating the identification in the first embodiment;

FIG.27 is a diagram showing a circuit structure for calculating the focal error signal in the second embodiment;

FIG.28 is a diagram showing a circuit structure for calculating the tracking error signal in the second embodiment;

FIG.29 is a diagram showing a circuit structure for calculating the magneto-optic signal in the second embodiment;

FIG.30 is a diagram showing a circuit structure for calculating the identification signal in the second embodiment;

FIG.31 is a diagram showing another circuit structure for calculating the identification signal in the second embodiment;

FIG.32 is a diagram showing a circuit structure for calculating the focal error signal in the third embodiment;

FIG.33 is a diagram showing a circuit structure for calculating the tracking error signal in the third embodiment;

FIG.34 is a diagram showing a circuit structure for calculating the magneto-optic signal in the third embodiment;

FIG.35 is a diagram showing a circuit structure for calculating the identification signal in the third embodiment;

FIG.36 is a diagram showing another circuit structure for calculating the identification signal i the third embodiment;

FIG.37 is a diagram showing another circuit structure for calculating the magneto-optic signal in the third embodiment; and

FIG.38 is a diagram showing still another circuit structure for calculating the identification signal in the third embodiment.

## DESCRIPTION OF THE PREFERRED EMBODIMENTS

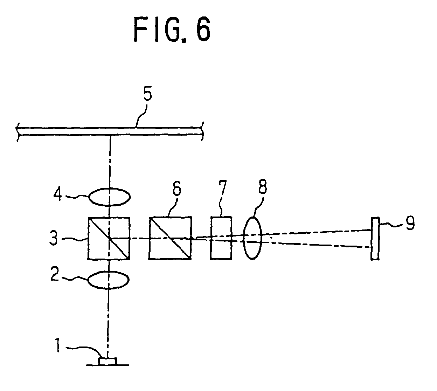

FIG.6 shows a first embodiment of the optical information recording/reproducing apparatus according to the present invention. In FIG.6, those parts which are the same as those corresponding parts in FIG.1 are designated by the same reference numerals.

As shown in FIG.6, a magneto-optic head unit of an optical information recording/reproducing apparatus is arranged under a magneto-optic disk 5. A laser beam emitted from a laser diode 1 which is used as a coherent light source is converted into a parallel ray by a collimator lens 2, and is input to a beam splitter 3. The parallel ray transmitted through the beam splitter 3 is converged on a magnetic layer of the magneto-optic disk 5 by an objective lens 4. The converged laser beam is reflected by the magneto-optic disk 5, and is input again to the beam splitter 3. This time, the reflected light beam is reflected by the beam splitter 3 towards a photodetector unit 9. More particularly, the reflected light beam is reflected by the beam splitter 3 and is input to a Wollaston prism 6 which is an analyzer.

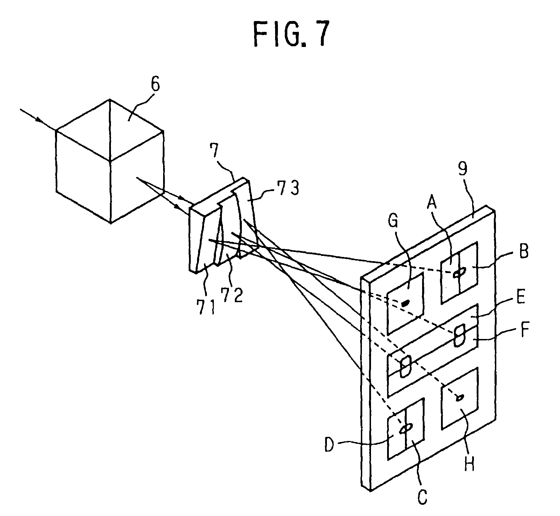

FIG.7 shows a perspective view of an important part of the first embodiment, that is, a signal detection system, on an enlarged scale. FIG.7 shows a state where the light beam output from the Wollaston prism 6 is projected on the photodetector unit 9, viewed from the back surface side of the photodetector unit 9. The reflected light beam input to the Wollaston prism 6 is separated into two polarized light beams and input to a composite prism 7. As shown in FIG.7, the composite prism 7 is an optical element having three deflection surfaces 71, 72 and 73 arranged side by side from the left to right. The deflection surfaces 71 and 73 on both sides of the composite prism 7 have tapered surfaces for deflecting the light beam in upward and downward directions by mutually different angles. On the other hand, the deflection surface 72 at the central part of the composite prism 7 has a convex shape having a curvature with respect to the optical axis. Each of the two polarized light beams input to the composite prism 7 having the structure described above is spatially split into three by the three deflection surfaces 71, 72 and 73, thereby outputting a total of six light beams from the composite prism 7. The six light beams output from the composite prism 7 are projected on the photodetector unit 9 via a condenser lens 8. For the sake of convenience, the illustration of the condenser lens 8 shown in FIG.6 is omitted in FIG.7.

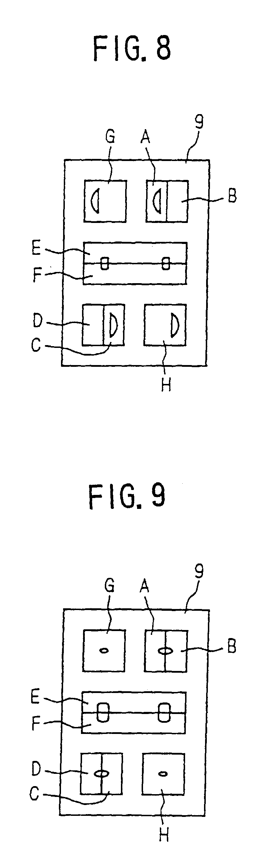

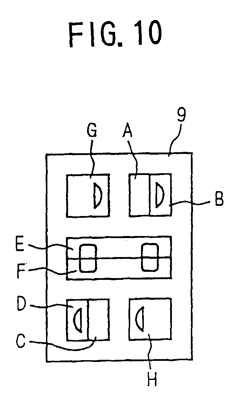

FIGS.8 through 10 respectively show plan views of the photodetector unit 9. FIG.8 shows a state where the objective lens 4 and the magneto-optic disk 5 are close to each other. FIG.9 shows a state where the laser beam is in focus on the magneto-optic disk 5. In addition, FIG.10 shows a state where the objective lens 4 and the magneto-optic disk 5 are far away from each other. For the sake of convenience, FIGS.8 through 10 show the photodetector unit 9 viewed from a back surface side of the photodetector unit 9.

As may be seen from FIGS.8 through 10, the photodetector unit 9 is a light receiving element, and photodetectors of the photodetector unit 9 are arranged in three stages from the top to bottom in the vertical direction. An upper stage portion of the photodetector unit 9 has a photodetector including a photodetector part G for detecting a magneto-optic signal MO and an identification signal ID, and a 2-part photodetector including photodetector parts A and B for detecting a focal error signal FES. A middle stage portion of the photodetector unit 9 has a 2-part photodetector including photodetector parts E and F for detecting a tracking error signal TES. Further, a lower stage portion of the photodetector unit 9 has a 2-part photodetector including photodetector parts C and D for detecting the focal error signal FES, and a photodetector including a photodetector part H for detecting the magneto-optic signal MO and the identification signal ID. The 2-part photodetector in the lower stage portion and including the photodetector parts C and D is arranged below the photodetector in the upper stage portion and including the photodetector part G for detecting the magneto-optic signal MO and the identification signal ID. On the other hand, the 2-part photodetector in the upper stage portion and including the photodetector parts A and B is arranged above the photodetector in the lower stage portion and including the photodetector part H for detecting the magneto-optic signal MO and the identification signal ID. The photodetector parts A and B are separated by a vertical division line, and the photodetector parts C and D are separated by a vertical division line. The photodetector parts E and F are separated by a horizontal division line. In the following description, outputs of the above described photodetector parts A through H are denoted by the same reference characters as these parts.

As shown in FIG.8, the spots of the six light beams are formed on the photodetector unit 9, and the outputs A through H are obtained from the corresponding photodetector parts A through H. The focal error signal FES using the Foucault technique can be generated based on the following formula (1) by calculation, using known adders and subtracter.

$$FES = (A+C)-(B+D) \qquad (1)$$

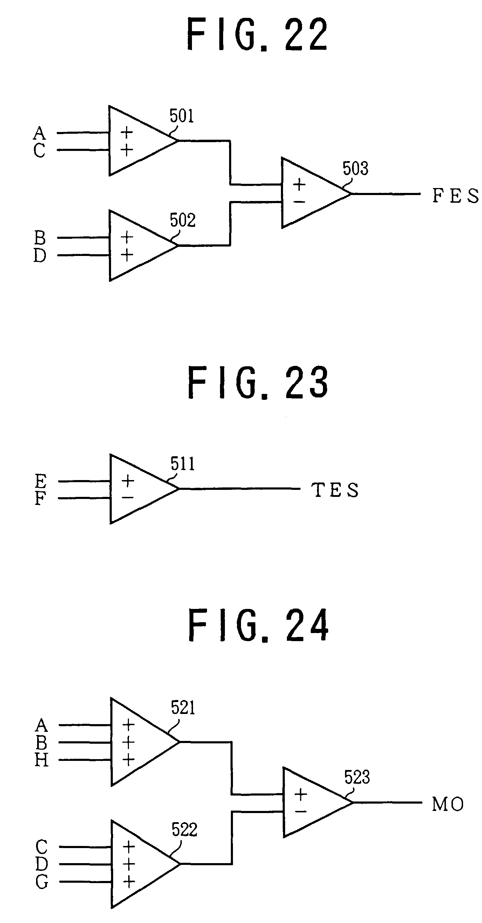

FIG.22 is a diagram showing a circuit structure for calculating the focal error signal FES according to the formula (1). In FIG.22, adder 501 adds the outputs of the photodetector parts A and C, and an adder 502 adds the outputs of the photodetector parts B and D. A subtracter 503 subtracts an output of the adder 502 from an output of the adder 501, and produces the focal error signal FES.

The tracking error signal TES using the push-pull technique can be generated based on the following formula (2) by calculation using a known subtracter.

$$TES = E-F \qquad (2)$$

FIG.23 is a diagram showing a circuit structure for calculating the tracking error signal TES according to the formula (2). In FIG.23, a subtracter 511 subtracts the output of the photodetector part F from the output of the photodetector part E, and produces the tracking error signal TES.

The magneto-optic signal MO can be reproduced based on the following formula (3) by calculation, using known adders and subtracter.

$$MO = (A+B+H)-(C+D+G) \qquad (3)$$

FIG.24 is a diagram showing a circuit structure for calculating the magneto-optic signal MO according to the formula (3). In FIG.24, an adder 521 adds the outputs of the photodetector parts A, B and H, and an adder 522 adds the outputs of the photodetector parts C, D and G. A subtracter 523 subtracts an output of the adder 522 from an output of the adder 521, and produces the magneto-optic signal MO.

In addition, positional information such as track and sector is prerecorded on the magneto-optic disk 5. This positional information is called an identification signal or ID signal. The identification signal ID is recorded in the form of pits preformed on the magneto-optic disk 5, as is well known. The identification signal ID recorded on the magneto-optic disk 5 can be reproduced based on the following formula (4a) or (4b) by calculation, using known adders. In other words, while the magneto-optic signal MO is obtained from a difference between the outputs of the adders, the identification signal ID is obtained from a sum of the outputs of the adders.

$$ID = (A+B+H)+(C+D+G) \qquad (4a)$$

$$ID = A+B+C+D+E+F+H+G \qquad (4b)$$

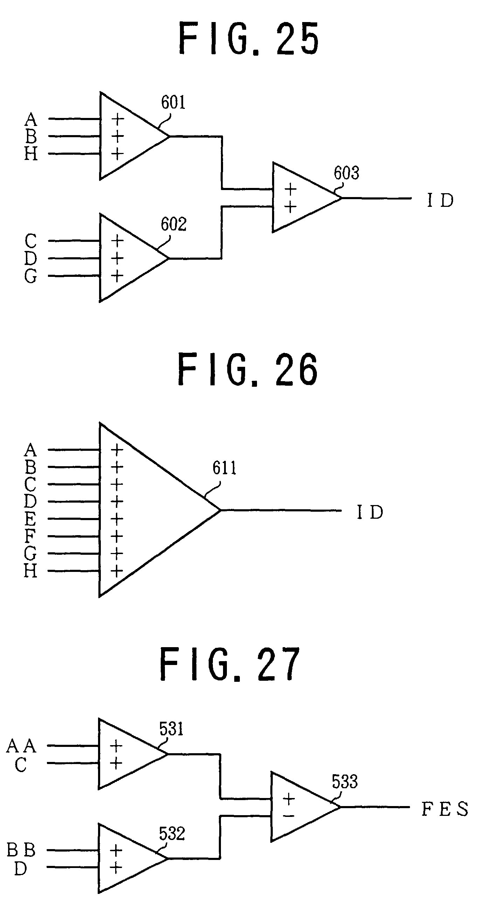

FIG.25 is a diagram showing a circuit structure for calculating the identification signal ID according to the formula (4a). In FIG.25, an adder 601 adds the outputs of the photodetector parts A, B and H, and an adder 602 adds the outputs of the photodetector parts C, D and G. An adder 603 adds an output of the adder 601 and an output of the adder 602, and produces the identification signal ID.

FIG.26 is a diagram showing another circuit structure for calculating the identification signal ID according to the formula (4b). In FIG.26, an adder 611 adds the outputs of the photodetector parts A, B, C, D, E, F, G and H, and produces the identification signal ID.

When the identification signal ID is reproduced based on the formula (4a), the number of adders provided in the LSI is relatively small, thereby making it possible to improve the S/N ratio of the identification signal ID. On the other hand, the identification signal ID may become distorted depending on the shape and depth of the pits formed in the magneto-optic disk 5. Hence, when the identification signal ID is reproduced based on the formula (4b), it is possible to positively prevent the identification signal ID from becoming distorted because all of the diffracted light beams from the pits of the magneto-optic disk 5 are used to detect the identification signal ID. In other words, when the identification signal ID is reproduced based on the formula (4b), the identification signal ID is reproduced based on all diffracted lights from the pits of the magneto-optic disk 5, and it is possible to prevent the identification signal ID from becoming distorted depending on the shape and depth of the pits.

According to this embodiment, a beam splitter (or light splitting part) comprises a plurality of beam splitting stages for splitting the reflected light beam from the magneto-optic disk 5 into a plurality of light beams which are projected onto a single photodetector unit 9. More particularly, the beam splitter (or light splitting part) comprises the Wollaston prism 6 and the composite prism 7 in this embodiment, and the reflected light beam from the magneto-optic disk 5 is split into six light beams. The six split light beams are projected onto the single photodetector unit 9. As a result, the optical information recording/reproducing apparatus can be formed by a relatively small number of parts, and the arrangement of these relatively small number of parts can be simply adjusted with ease. Furthermore, the cost of the optical information recording/reproducing apparatus can be reduced due to the relatively small number of parts used. In addition, since the photodetector unit 9 is formed by only five photodetectors (eight photodetector parts A through H), it is possible to reduce the stray capacitance of the photodetectors and to reduce the noise generated by the adders and subtracter within the LSI which obtains the focal error signal FES, the tracking error signal TES, the magneto-optic signal MO and the identification signal ID, as compared to the apparatus proposed in the Japanese Laid-Open Patent Application No.7-73479 which projects a reflected light beam which is divided into nine light beams on a single photodetector, for example. Consequently, the signal qualities of these signals FES, TES, MO and ID can be improved.

In addition, the magneto-optic signal MO and the identification signal ID are reproduced using also the outputs of the 2-part photodetectors (photodetector parts A, B, C and D) which detect the light beams for obtaining the focal error signal FES, in addition to using the outputs of the photodetectors (photodetector parts G and H) which detect the light beams for obtaining the magneto-optic signal and the identification signal ID. Thus, because of the small number of photodetector parts used to reproduce the magneto-optic signal MO and the identification signal ID, the S/N ratio of these signal MO and ID is improved. On the other hand, the required frequency bands of the magneto-optic signal MO and the identification signal ID are higher than those of the tracking error signal TES and the focal error signal FES which requires a frequency band lower than that of the tracking error signal TES. Further, when two or more kinds of signals are obtained based on the detection of the same light beam, the circuit construction of the circuit used to obtain these signals becomes simpler as the frequency bands of these signal become wider apart from each other. Therefore, by obtaining the magneto-optic signal MO and the identification signal ID based on the detection of the same light beam that is used to obtain the focal error signal FES, it is possible to simplify the circuit construction also from this point of view.

Furthermore, because the magneto-optic signal MO and the identification signal ID are reproduced using also the outputs of the 2-part photodetectors (photodetector parts A, B, C and D) which detect the light beams for obtaining the focal error signal FES in addition to using the outputs of the photodetectors (photodetector parts G and H) which detect the light beams for obtaining the magneto-optic signal and the identification signal ID, the resolution of the magneto-optic signal MO and the identification signal ID is improved. It is taught in a Japanese Laid-Open Patent Application No.7-6379 that the resolution of the magneto-optic signal is improved when a central portion of the reflected light beam from a recording medium is masked and the magneto-optic signal is detected from a peripheral portion of the reflected light beam. In this embodiment, the light beam used to detect the focal error signal FES is the light beam transmitted through the tapered deflection surfaces 71 and 73 of the composite prism 7 as shown in FIG.7. In other words, out of the reflected light beam from the magneto-optic disk 5, the light beam transmitted through the central deflection surface 72 of the composite prism 7 is not used, and only the light beam transmitted through the tapered deflection surfaces 71 and 73 on both sides of the central deflection surface 72 of the composite prism 7 is used to detect the focal error signal FES. As a result, the resolution of the magneto-optic signal MO and the identification signal ID is improved by obtaining the magneto-optic signal MO and the identification signal ID using the light beam which is transmitted through the tapered deflection surfaces 71 and 73 of the composite prism 7 and is used to detect the focal error signal FES.

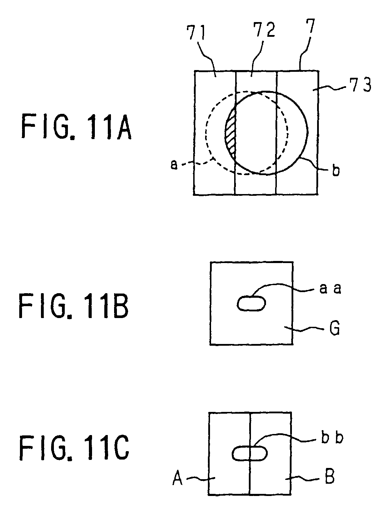

Next, a description will be given of the light beam that is used to detect the focal error signal FES in this embodiment. FIGS.11A through 11C are diagrams for explaining the shape of spots formed by the split light beams. FIG.11A shows a plan view of the deflection surfaces 71, 72 and 73 of the composite prism 7, together with light beams "a" and "b" when the two polarized light beams are transmitted through the deflection surfaces 71, 72 and 73. FIGS.11B and 11C respectively show plan views of the photodetector part G of the photodetector unit 9 on which the light beams "a" and "b" are projected, together with spots "aa" and "bb" of the light beams "a" and "b" irradiated on the photodetector part G and the photodetector parts A and B via the deflection surface 71. FIGS.11B and 11C show the photodetector viewed from the back surface side of the photodetector unit 9.

The area of the light beam "b" transmitted through the deflection surface 71 is smaller than that of the light beam "a", which means that the light beam "b" is deflected more. In this state, the length of the spot "bb" formed on the photodetector parts A and B along the major axis (major axis diameter) is longer than that of the spot "aa" formed on the photodetector part G. According to the Foucault technique, the longer the length of the spot along the major axis, the easier it is to perform the required adjustments of the arrangement of the optical elements and the photodetectors, and the focal error signal FES is less affected by changes with time, temperature changes and the like. Hence, in this embodiment, the locations of the 2-part photodetector including the photodetector parts A and B and the 2-part photodetector including the photodetector parts C and D are determined so that out of the light beams transmitted through the deflection surfaces 71 and 73, the light beams which are deflected more are projected onto the 2-part photodetector including the photodetector parts A and B and the 2-part photodetector including the photodetector part C and D.

Next, a description will be given of the effects of the temperature on the magneto-optic head unit of this embodiment. When the temperature of the magneto-optic head unit and the optical information recording/reproducing apparatus rises, a housing which fixes the photodetector unit 9 undergoes a thermal expansion, thereby making the photodetectors of the photodetector unit 9 farther away from the composite prism 7. For similar reasons, the objective lens 4 become farther away from the magneto-optic disk 5. As a result, the reflected light beam from the magneto-optic disk 5 is once converged and thereafter spreads before being projected onto the photodetector unit 9. The spot formed on the 2-part photodetector including the photodetector parts A and B and the spot formed on the 2-part photodetector including the photodetector parts C and D are projected on the corresponding division lines of the 2-part photodetectors when the 2-part photodetectors are located at the focal positions of the light beams as shown in FIG.10, for example. However, if the 2-part photodetectors are located farther away from the focal positions of the light beams, the spots of the light beams are formed on the outer sides of the corresponding division lines of the 2-part photodetectors as shown in FIG.10, and in this case, the spots of the light beams are only formed on the photodetector parts B and D of the 2-part photodetectors.

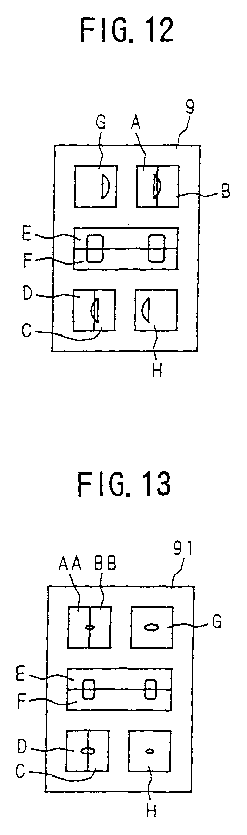

When the temperature of the magneto-optic head unit and the optical information recording/reproducing apparatus rises, the separation angle of the light beams output from the Wollaston prism 6 also changes. FIG.12 shows a plan view of the photodetector unit 9 at a high temperature, viewed from the back surface side of the photodetector unit 9. The Wollaston prism 6 is made of a birefringence material such as crystal and lithium-niobate, and the separation angle of the light beams changes depending on the temperature. For example, a description will be given of the Wollaston prism 6 having a separation angle which becomes narrow at high temperatures. As shown in FIG.12, the spots of the light beams formed on the 2-part photodetectors located on the right and left move towards the inner side of the photodetector unit 9 due to the temperature characteristic of the Wollaston prism 6. In other words, the separation angle of the light beams output from the Wollaston prism 6 becomes narrow due to the temperature rise, and the spots of the light beams move toward the inner side of the photodetector unit 9 to become projected on the corresponding division lines of the 2-part photodetectors respectively including the photodetector parts A and B and the photodetector parts C and D.

In the case where the separation angle of the light beams output from the Wollaston prism 6 used becomes narrow at high temperatures and the 2-part photodetectors located on the right and left of the photodetector unit 9 are positioned farther away from the focal positions of the light beams, the light beams used are such that the spots of the light beams are formed on the outer side of the corresponding division lines of the 2-part photodetectors. Hence, when the temperature rises and the 2-part photodetectors become farther away from the Wollaston prism 6, the separation angle of the light beams output from the Wollaston prism 6 becomes narrow such that the spots of the light beams are projected on the corresponding division lines of the 2-part photodetectors of the photodetector unit 9. As a result, it is possible to carry out a stable automatic focusing operation based on an accurate focal error signal FES even when the temperature becomes high. On the other hand, in the case where the separation angle of the light beams output from the Wollaston prism 6 used or, a Rochon prism (not shown) which is used in place of the Wollaston prism 6, becomes wide at high temperatures and the 2-part photodetectors located on the right and left of the photodetector unit 9 are positioned farther away from the focal positions of the light beams, the light beams used are such that the spots of the light beams are formed on the inner side of the corresponding division lines of the 2-part photodetectors. Hence, when the temperature rises and the 2-part photodetectors become farther away from the Wollaston prism 6, the separation angle of the light beams output from the Wollaston prism 6 becomes wide such that the spots of the light beams are projected on the corresponding division lines of the 2-part photodetectors of the photodetector unit 9. As a result, it is possible to carry out a stable automatic focusing operation based on an accurate focal error signal FES even when the temperature becomes high.

Next, a description will be given of a second embodiment of the optical information recording/reproducing apparatus according to the present invention, by referring to FIG.13. In this embodiment, the basic construction of the optical information recording/reproducing apparatus is basically the same as that of the first embodiment shown in FIGS.6 and 7, but a photodetector unit 91 shown in FIG.13 is used in place of the photodetector unit 9. FIG.13 shows a plan view of the photodetector unit 91 used in this second embodiment. In FIG.13, those parts which are the same as those corresponding parts in FIG.8 are designated by the same reference characters, and a description thereof will be omitted.

FIG.13 shows the photodetector unit 91 in a state where the laser beam is in focus on the magneto-optic disk 5, viewed from the back surface side of the photodetector unit 91. The light beams reaching the photodetector unit 91 via the Wollaston prism 6 and the composite prism 7 is obtained via the same optical path as that of the first embodiment. Photodetectors of the photodetector unit 91 are arranged in three stages from the top to bottom in the vertical direction. An upper stage portion of the photodetector unit 91 has a photodetector including a photodetector part G for detecting a magneto-optic signal MO and an identification signal ID, and a 2-part photodetector including photodetector parts AA and BB for detecting a focal error signal FES. A middle stage portion of the photodetector unit 91 has a 2-part photodetector including photodetector parts E and F for detecting a tracking error signal TES. Further, a lower stage portion of the photodetector unit 91 has a 2-part photodetector including photodetector parts C and D for detecting the focal error signal FES, and a photodetector including a photodetector part H for detecting the magneto-optic signal MO and the identification signal ID.

In this second embodiment, the light beam which forms a spot having an oval shape which is longer along the major axis and the light beam which forms a spot having an oval shape which is shorter along the major axis on the photodetector unit 91 are used to obtain the focal error signal FES. In other words, one of the two light beams obtained by the separation made at the Wollaston prism 6 or Rochon prism is used to detect the focal error signal FES. As a result, the obtained focal error signal FES is less affected by the temperature characteristic of the Wollaston prism 6 or Rochon prism when compared with the first embodiment described above.

As described above, the separation angle of the two light beams output from the Wollaston prism 6 or Rochon prism changes with temperature. For example, the separation angle of the two light beams output from the Wollaston prism 6 becomes narrow at high temperatures. Hence, if both the two light beams separated and output from the Wollaston prism 6 are used to detect the focal error signal FES, the focal error signal FES is greatly affected by the temperature. But if only one of the two light beams separated and output from the Wollaston prism 6 is used to detect the focal error signal FES as in the case of this second embodiment, it is possible to detect the focal error signal FES without being affected by the temperature characteristic of the Wollaston prism 6 or Rochon prism.

In this embodiment, if the outputs of the photodetector parts AA, BB and C through H of the photodetector unit 91 are denoted by the same reference characters as these parts, the focal error signal FES according to the Foucault technique, the tracking error signal TES according to the push-pull technique, the magneto-optic signal MO and the identification signal ID can be obtained based on the following formulas (5) through (8a) or (8b) by calculation, using known adders and subtracter.

$$FES = (AA+C)-(BB+D) \qquad (5)$$

$$TES = E-F \qquad (6)$$

$$MO = (AA+BB+C+D)-(G+H) \qquad (7)$$

$$ID = (AA+BB+C+D)+(G+H) \qquad (8a)$$

$$ID = AA+BB+C+D+E+F+G+H \qquad (8b)$$

FIG.27 is a diagram showing a circuit structure for calculating the focal error signal FES according to the formula (5). In FIG.27, an adder 531 adds the outputs of the photodetector parts AA and C, and an adder 532 adds the outputs of the photodetector parts BB and D. A subtracter 533 subtracts an output of the adder 532 from an output of the adder 531, and produces the focal error signal FES.

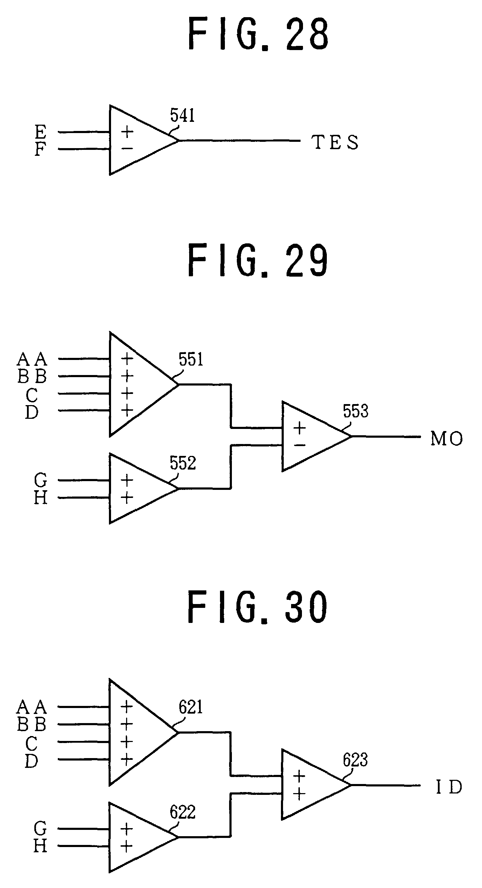

FIG.28 is a diagram showing a circuit structure for calculating the tracking error signal TES according to the formula (6). In FIG.28, a subtracter 541 subtracts the output of the photodetector part F from the output of the photodetector part E, and produces the tracking error signal TES.

FIG.29 is a diagram showing a circuit structure for calculating the magneto-optic signal MO according to the formula (7). In FIG.29, an adder 551 adds the outputs of the photodetector parts AA, BB, C and D, and an adder 552 adds the outputs of the photodetector parts G and H. A subtracter 553 subtracts an output of the adder 552 from an output of the adder 551, and produces the magneto-optic signal MO.

FIG.30 is a diagram showing a circuit structure for calculating the identification signal ID according to the formula (8a). In FIG.30, an adder 621 adds the outputs of the photodetector parts AA, BB, C and D, and an adder 622 adds the outputs of the photodetector parts G and H. An adder 623 adds outputs of the adders 621 and 622, and produces the identification signal ID.

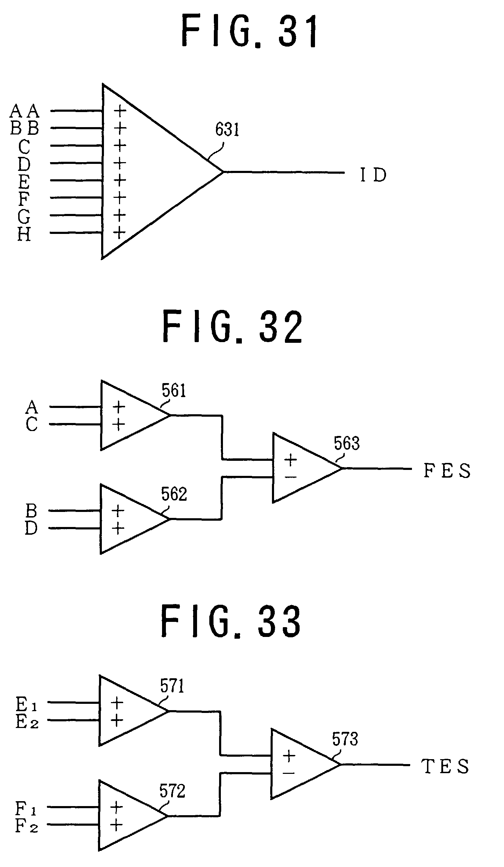

FIG.31 is a diagram showing another circuit structure for calculating the identification signal ID according to the formula (8b). In FIG.31, an adder 631 adds the outputs of the photodetector parts AA, BB, C, D, E, F, G and H, and produces the identification signal ID.

When the identification signal ID is reproduced based on the formula (8a), the number of adders provided in the LSI is relatively small, thereby making it possible to improve the S/N ratio of the identification signal ID. On the other hand, the identification signal ID may become distorted depending on the shape and depth of the pits formed in the magneto-optic disk 5. Hence, when the identification signal ID is reproduced based on the formula (8b), it is possible to positively prevent the identification signal ID from becoming distorted because all of the diffracted light beams from the pits of the magneto-optic disk 5 are used to detect the identification signal ID.

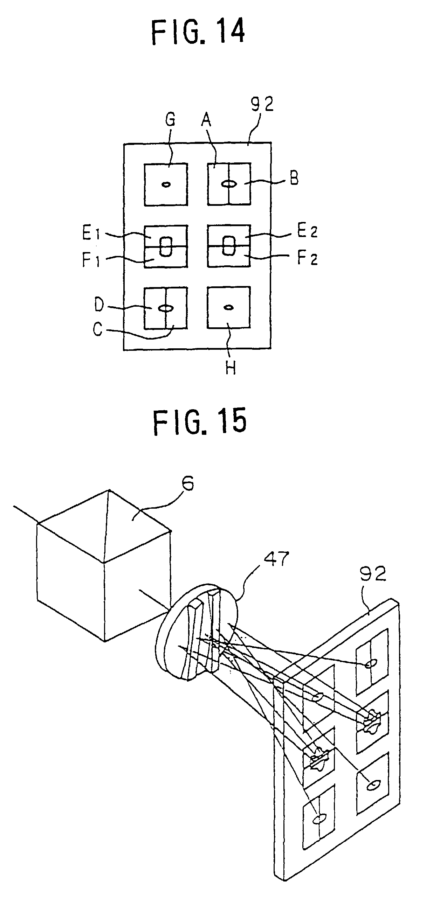

Next, a description will be given of a third embodiment of the optical information recording/reproducing apparatus according to the present invention, by referring to FIG.14. In this embodiment, the basic construction of the optical information recording/reproducing apparatus is basically the same as that of the first embodiment shown in FIGS.6 and 7, but a photodetector unit 92 shown in FIG.14 is used in place of the photodetector unit 9. FIG.14 shows a plan view of the photodetector unit 92 used in this third embodiment. In FIG.14, those parts which are the same as those corresponding parts in FIG.8 are designated by the same reference characters, and a description thereof will be omitted.

FIG.14 shows the photodetector unit 92 in a state where the laser beam is in focus on the magneto-optic disk 5, viewed from the back surface side of the photodetector unit 92. The light beams reaching the photodetector unit 92 via the Wollaston prism 6 and the composite prism 7 is obtained via the same optical path as that of the first embodiment. Photodetectors of the photodetector unit 92 are arranged in three stages from the top to bottom in the vertical direction. An upper stage portion of the photodetector unit 92 has a photodetector including a photodetector part G for detecting a magneto-optic signal MO and an identification signal ID, and a 2-part photodetector including photodetector parts A and B for detecting a focal error signal FES. A middle stage portion of the photodetector unit 92 has a 2-part photodetector including photodetector parts E1 and F1 and a 2-part photodetector including photodetector parts E2 and F2 for detecting a tracking error signal TES. Further, a lower stage portion of the photodetector unit 92 has a 2-part photodetector including photodetector parts C and D for detecting the focal error signal FES, and a photodetector including a photodetector part H for detecting the magneto-optic signal MO and the identification signal ID.

The 2-part photodetectors respectively including the photodetector parts E1 and F1 and the photodetector parts E2 and F2 receive the light beams output from the deflection surface 72 of the composite prism 7. If the outputs of the photodetector parts A through D, E1, E2, F1, F2, G and H of the photodetector unit 92 are denoted by the same reference characters as these parts, the focal error signal FES according to the Foucault technique, the tracking error signal TES according to the push-pull technique, the magneto-optic signal MO and the identification signal ID can be obtained based on the following formulas (9a) through (12a) or (12aa) by calculation using known adders and subtracter.

$$FES = (A+C)-(B+D) \qquad (9a)$$

$$TES = (E1+E2)-(F1+F2) \qquad (10a)$$

$$MO = (E1+F1+G)-(E2+F2+H) \qquad (11a)$$

$$ID = (E1+F1+G)+(E2+F2+H) \qquad (12a)$$

$$ID = A+B+C+D+E1+E2+F1+F2+G+H \qquad (12aa)$$

FIG.32 is a diagram showing a circuit structure for calculating the focal error signal FES according to the formula (9a). In FIG.32, an adder 561 adds the outputs of the photodetector parts A and C, and an adder 562 adds the outputs of the photodetector parts B and D. A subtracter 563 subtracts an output of the adder 562 from an output of the adder 561, and produces the focal error signal FES.

FIG.33 is a diagram showing a circuit structure for calculating the tracking error signal TES according to the formula (10a). In FIG.3, an adder 571 adds the outputs of the photodetector parts E1 and E2, and an adder 572 adds the outputs of the photodetector parts F1 and F2. A subtracter 573 subtracts an output of the adder 572 from an output of the adder 571, and produces the tracking error signal TES.

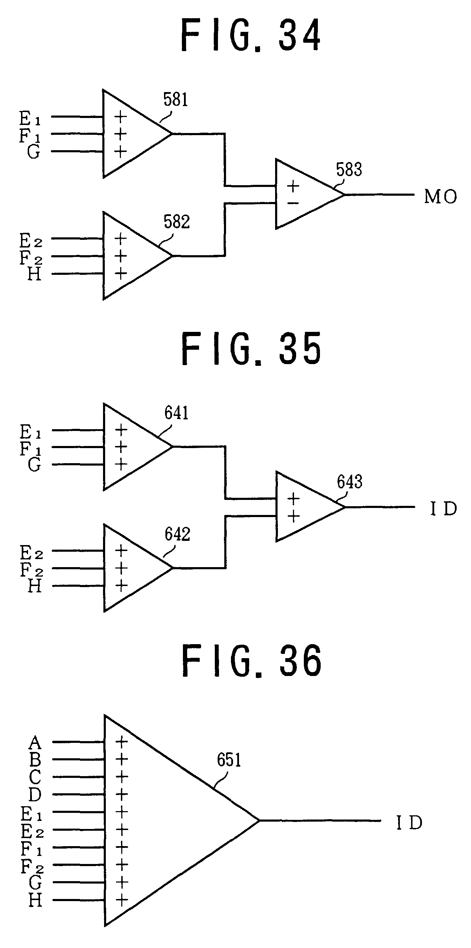

FIG.34 is a diagram showing a circuit structure for calculating the magneto-optic signal MO according to the formula (11a). In FIG.34 an adder 581 adds the outputs of the photodetector parts E1, F1 and G, and an adder 582 adds the outputs of the photodetector parts E2, F2 and H. A subtracter 583 subtracts an output of the adder 582 from an output of the adder 581, and produces the magneto-optic signal MO.

FIG.35 is a diagram showing a circuit structure for calculating the identification signal ID according to the formula (12a). In FIG.35, an adder 641 adds the outputs of the photodetector parts E1, F1 and G, and an adder 642 adds the outputs of the photodetector parts E2, F2 and H. An adder 643 adds outputs of the adders 641 and 642, and produces the identification signal ID.

FIG.36 is a diagram showing another circuit structure for calculating the identification signal ID according to the formula (12aa). In FIG.36, an adder 651 adds the outputs of the photodetector parts A, B, C, D, E1, E2, F1, F2, G and H, and produces the identification signal ID.

When the identification signal ID is reproduced based on the formula (12a), the number of adders provided in the LSI is relatively small, thereby making it possible to improve the S/N ratio of the identification signal ID. On the other hand, the identification signal ID may become distorted depending on the shape and depth of the pits formed in the magneto-optic disk 5. Hence, when the identification signal ID is reproduced based on the formula (12aa), it is possible to positively prevent the identification signal ID from becoming distorted because all of the diffracted light beams from the pits of the magneto-optic disk 5 are used to detect the identification signal ID.

According to this embodiment, the magneto-optic signal MO and the identification signal ID are reproduced using the light beams which are used to detect the tracking error signal TES.

Alternatively, it is possible to reproduce the magneto-optic signal MO and the identification signal ID using the light beams which are used to detect both the tracking error signal TES and the focal error signal FES. In this case, the focal error signal FES according to the Foucault technique, the tracking error signal TES according to the push-pull technique, the magneto-optic signal MO and the identification signal ID can be obtained based on the following formulas (9b) through (12b) by calculation using known adders and subtracter.

$$FES = (A+C)-(B+D) \qquad (9b)$$

$$TES = (E1+E2)-(F1+F2) \qquad (10b)$$

$$MO = (A+B+E2+F2+H)-(C+D+E1+F1+G) \qquad (11b)$$

$$ID = (A+B+E2+F2+H)+(C+D+E1+F1+G) \qquad (12b)$$

The focal error signal FES according to the formula (9b) and the tracking error signal TES according to the formula (10b) can be calculated by circuit structures similar to those shown in FIGS.32 and 33.

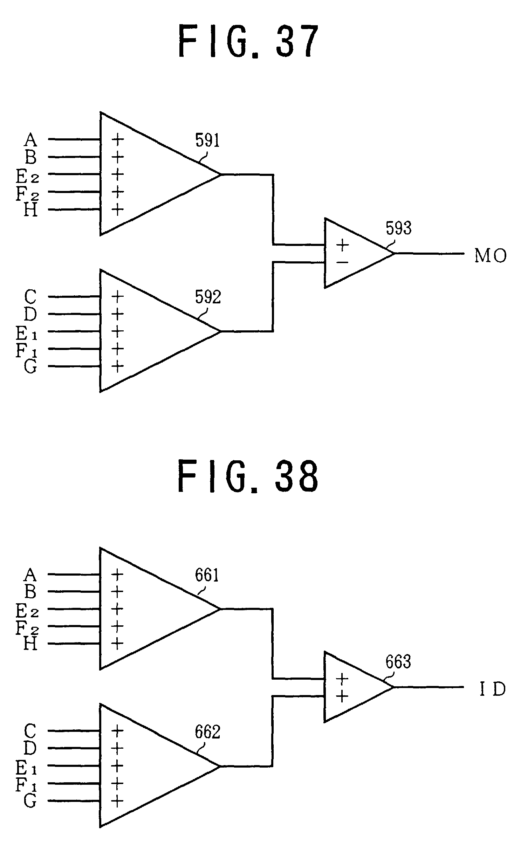

FIG.37 is a diagram showing a circuit structure for calculating the magneto-optic signal MO according to the formula (11b). In FIG.37, an adder 591 adds the outputs of the photodetector parts A, B, E2, F2 and H, and an adder 592 adds the outputs of the photodetector parts C, D, E1, F1 and G. A subtracter 593 subtracts an output of the adder 592 from an output of the adder 591, and produces the magneto-optic signal MO.

FIG.38 is a diagram showing a circuit structure for calculating the identification signal ID according to the formula (12b). In FIG.38, an adder 661 adds the outputs of the photodetector parts A, B, E2, F2 and H, and an adder 662 adds the outputs of the photodetector parts C, D, E1, F1 and G. An adder 663 adds outputs of the adders 661 and 662, and produces the identification signal ID.

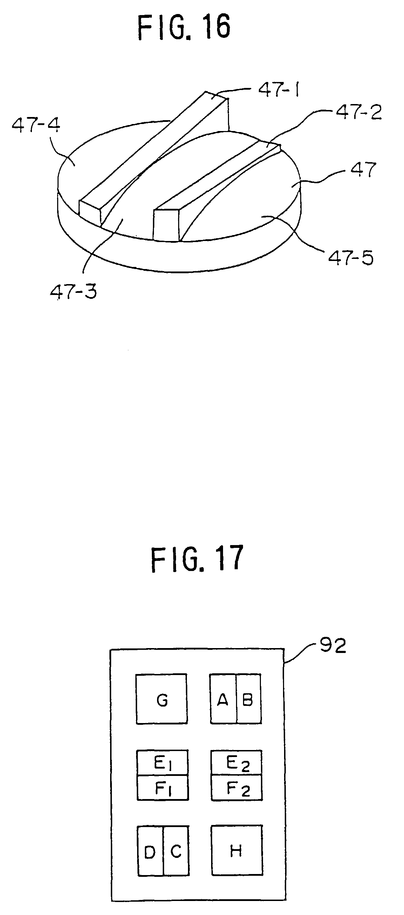

Next, a description will be given of a fourth embodiment of the optical information recording/reproducing apparatus according to the present invention, by referring to FIGS.15 through 17. In this embodiment, the basic construction of the optical information recording/reproducing apparatus is basically the same as that of the first embodiment shown in FIGS.6 and 7, but a composite prism 47 shown in FIGS.15 and 16 is used in place of the composite prism 7. FIG.15 shows a perspective view of an important part of this fourth embodiment, and the illustration of the condenser lens 8 is omitted FIG.16 shows a perspective view of the composite prism 47. FIG.17 shows a plan view of a photodetector unit 92 of this fourth embodiment, viewed from the back surface side of the photodetector unit 92. In FIGS.15 and 17, those parts which are the same as those corresponding parts in FIG.6, 7 and 14 are designated by the same reference numerals, and a description thereof will be omitted.

In this embodiment, the composite prism 47 and the photodetector unit 92 shown in FIG.15 are used in place of the composite prism 7 and the photodetector unit 9 shown in FIG.7. In addition, the reflected light beam from the magneto-optic disk 5 is split into two light beams by the Wollaston prism 6, and each of the two light beams are further split into five light beams by the composite prism 47, thereby resulting in ten (2 x 5 = 10) light beams being output from the composite prism 47. The ten light beams from the composite prism 47 are irradiated on corresponding ones of six photodetectors which form the photodetector unit 92.

FIG.16 shows a perspective view of the composite prism 47. As shown in FIG.16, the composite prism 47 includes tapered first and second parts 47-1 and 47-2, a central third part 47-3 which has a convex surface with a slight curvature, and peripheral fourth and fifth parts 47-4 and 47-5 which have convex surfaces with a slight curvature matching that of the third part 47-3. In other words, the third, fourth and fifth parts 47-3, 47-4 and 47-5 are all parts of a single convex surface having a slight curvature. The first and second parts 47-1 and 47-2 function similarly to the first and second parts 71 and 73 of the composite prism 7.

FIG.17 shows a plan view of the photodetector unit 92. As shown in FIG.17, the photodetector unit 92 includes the photodetectors respectively including the photodetector parts G and H, and the 2-part photodetectors respectively including the photodetector parts A and B, C and D, E1 and F2, and E2 and F2.

The two light beams output from the third part 47-3 of the composite prism 47 are respectively irradiated on the 2-part photodetector including the photodetector parts E1 and F1 and the 2-part photodetector including the photodetector parts E2 and F2. The two light beams output from the fourth part 47-4 of the composite prism 47 are respectively irradiated on the 2-part photodetector including the photodetector parts E1 and F1 and the 2-part photodetector including the photodetector parts E2 and F2. Further, the two light beams output from the fifth part 47-5 of the composite prism 47 are respectively irradiated on the 2-part photodetector including the photodetector parts E1 and F1 and the 2-part photodetector including the photodetector parts E2 and F2. On the other hand, the two light beams output from the first part 47-1 of the composite prism 47 are respectively irradiated on the photodetector including the photodetector part G and the 2-part photodetector including the photodetector parts A and B. The two light beams output from the second part 47-2 of the composite prism 47 are respectively irradiated on the 2-part photodetector including the photodetectors C and D and the photodetector including the photodetector part H.

The image formation points (focal points) of the four light beams output from the first and second parts 47-1 and 47-2 match the positions of the corresponding photodetectors in the upper and lower stages of the photodetector unit 92. On the other hand, the image formation points (focal points) of the two light beams output from each of the third, fourth and fifth parts 47-3, 47-4 and 47-5 are deviated from the positions of the corresponding 2-part photodetectors in the middle stage of the photodetector unit 92.

If the outputs of the photodetector parts A through D, E1, E2, F1, F2, G and H of the photodetector unit 92 are denoted by the same reference characters as these parts, the focal error signal FES using the Foucault technique, the tracking error signal TES using the push-pull technique, the magneto-optic signal MO, and the identification signal ID can be obtained by calculations based on the formulas (13) through (16a) or (16b) using known adders and subtracter.

$$FES = (A+C)-(B+D) \qquad (13)$$

$$TES = (E1+E2)-(F1+F2) \qquad (14)$$

$$MO = (E1+F1)-(E2+F2) \qquad (15)$$

$$ID = (E1+F1)+(E2+F2) \qquad (16a)$$

$$ID = A+B+C+D+E1+E2+F1+F2+G+H \qquad (16b)$$

When the identification signal ID is reproduced based on the formula (16a), the number of adders provided in the LSI is relatively small, thereby making it possible to improve the S/N ratio of the identification signal ID. On the other hand, the identification signal ID may become distorted depending on the shape and depth of the pits formed in the magneto-optic disk 5. Hence, when the identification signal ID is reproduced based on the formula (16b), it is possible to positively prevent the identification signal ID from becoming distorted because all of the diffracted light beams from the pits of the magneto-optic disk 5 are used to detect the identification signal ID.

According to the magneto-optic signal MO obtained by the formula (15), it is possible to obtain a relatively high resolution. The reason for this further improved resolution of the magneto-optic signal MO using the composite prism 47 having the shape shown in FIG.16 may be understood from the teachings of the Proceedings of Magneto-Optical Recording International Symposium '96, J. Magn. Soc. Jpn., Vol.20, Supplement No.S1 (1996), pp.233-238.

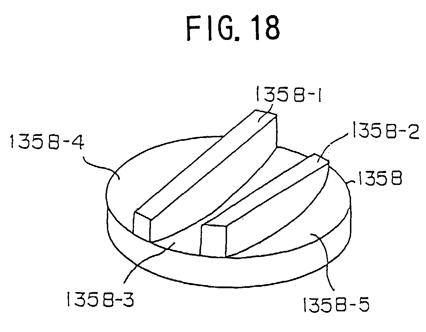

FIG.18 shows a perspective view of an embodiment of the composite prism. The composite prism shown in FIG.18 may be used in place of the composite prism 47 shown in FIGS.15 and 16, for example.

As shown in FIG.18, a composite prism 135B includes tapered first and second parts 135B-1 and 135B-2, a central third part 135B-3 which has a concave surface with a slight curvature, and peripheral fourth and fifth parts 135B-4 and 135B-5 which have concave surfaces with a slight curvature matching that of the third part 135B-3. In other words, the third, fourth and fifth parts 135B-3, 135B-4 and 135B-5 are all parts of a single concave surface having a slight curvature. The first and second parts 135B-1 and 135B-2 function similarly to the first and second parts 71 and 73 of the composite prism 7 of the first embodiment described above. The third, fourth and fifth parts 135B-3, 135B-4 and 135B-5 function similarly to the third, fourth and fifth parts 47-3, 47-4 and 47-5 of the composite prism 47 shown in FIG.16. Further, the third part 135B-3 in particular function similarly to a deflection surface 72a of a composite prism 17 of the fifth embodiment which will be described later.

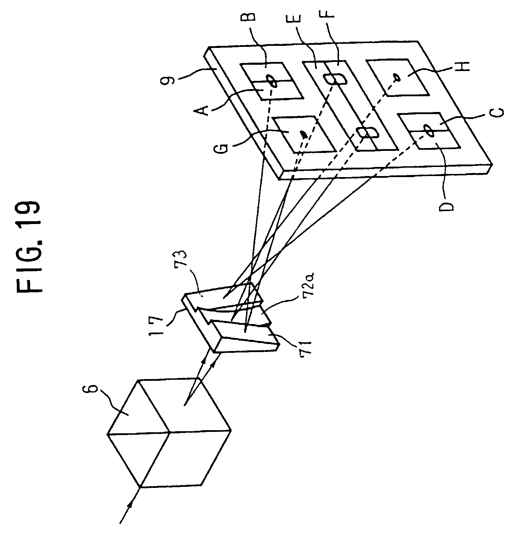

Next, a description will be given of a fifth embodiment of the optical information recording/reproducing apparatus according to the present invention, by referring to FIG.19. In this embodiment, the basic construction of the optical information recording/reproducing apparatus is basically the same as that of the first embodiment shown in FIG.6, but a composite prism 17 shown in FIG.19 is used in place of the composite prism 7. FIG.19 shows a perspective view of an important part of this fifth embodiment, and in FIG.19, those parts which are the same as those corresponding parts in FIGS.6 through 8 are designated by the same reference numerals, and a description thereof will be omitted.

FIG.19 shows a state where the light beam output from the Wollaston prism 6 is projected on the photodetector unit 9. The reflected light beam input to the Wollaston prism 6 is separated into two polarized light beams and input to the composite prism 17. As shown in FIG.19, the composite prism 17 is an optical element having three deflection surfaces 71, 72a and 73 arranged side by side from the left to right. The deflection surfaces 71 and 73 on both sides of the composite prism 17 have tapered surfaces for deflecting the light beam in upward and downward directions by mutually different angles. On the other hand, the deflection surface 72a at the central part of the composite prism 17 has a concave shape having a curvature with respect to the optical axis, and directs the two split light beams towards the photodetector parts E and F of the 2-part photodetector forming the photodetector unit 9. Each of the two polarized light beams input to the composite prism 17 having the structure described above is spatially split into three by the three deflection surfaces 71, 72a and 73, thereby outputting a total of six light beams from the composite prism 17. The six light beams output from the composite prism 17 are projected on the photodetector unit 9 via a condenser lens 8. For the sake of convenience, the illustration of the condenser lens 8 shown in FIG.6 is omitted in FIG.19.

Otherwise, the functions and effects of this embodiment are similar to those of the first embodiment described above, and the focal error signal FES, the tracking error signal TES, the magneto-optic signal MO and the identification signal ID can be obtained based on the formulas described with reference to the first embodiment. Furthermore, this embodiment may employ the photodetector unit 91 or 92 of the second or third embodiment described above, so as to obtain similar functions and effects as those of the second or third embodiment.

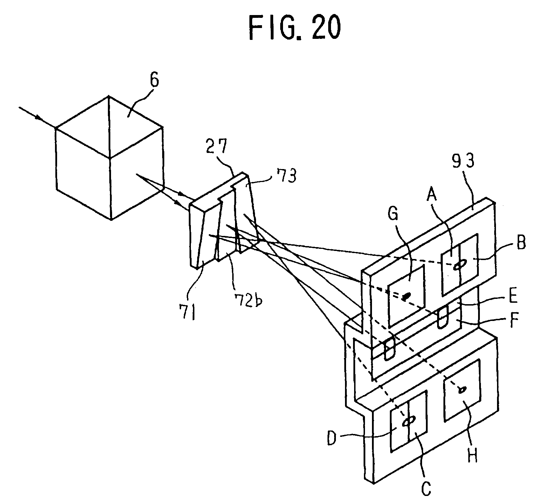

Next, a description will be given of a sixth embodiment of the optical information recording/reproducing apparatus according to the present invention, by referring to FIG.20. In this embodiment, the basic construction of the optical information recording/reproducing apparatus is basically the same as that of the first embodiment shown in FIG.6, but a composite prism 27 and a photodetector unit 93 shown in FIG.20 are used in place of the composite prism 7 and the photodetector unit 9. FIG.20 shows a perspective view of an important part of this sixth embodiment, and in FIG.20, those parts which are the same as those corresponding parts in FIGS.6 through 8 are designated by the same reference numerals, and a description thereof will be omitted.

FIG.20 shows a state where the light beam output from the Wollaston prism 6 is projected on the photodetector unit 93. The reflected light beam input to the Wollaston prism 6 is separated into two polarized light beams and input to a composite prism 27. As shown in FIG.20, the composite prism 27 is an optical element having three deflection surfaces 71b, 72b and 73b arranged side by side from the left to right. The deflection surfaces 71b and 73b on both sides of the composite prism 27 have tapered surfaces for deflecting the light beam in upward and downward directions by mutually different angles. On the other hand, the deflection surface 72b at the central part of the composite prism 27 has a flat surface which is perpendicular to the optical axis, and directs the two split light beams towards the photodetector parts E and F of a 2-part photodetector forming the photodetector unit 93. Each of the two polarized light beams input to the composite prism 27 having the structure described above is spatially split into three by the three deflection surfaces 71b, 72b and 73b, thereby outputting a total of six light beams from the composite prism 27. The six light beams output from the composite prism 27 are projected on the photodetector unit 93 via a condenser lens 8. For the sake of convenience, the illustration of the condenser lens 8 shown in FIG.6 is omitted in FIG.20.

The photodetector unit 93 has a stepped shape such that the 2-part photodetector in the middle stage and including the photodetector parts E and F is arranged closer to the composite prism 27 than the photodetectors in the upper and lower stages of the photodetector unit 93.

Otherwise, the functions and effects of this embodiment are similar to those of the first embodiment described above, and the focal error signal FES, the tracking error signal TES, the magneto-optic signal MO and the identification signal ID can be obtained based on the formulas described with reference to the first embodiment. Furthermore, this embodiment may employ the photodetector unit 91 or 92 of the second or third embodiment described above by modifying the photodetector 91 or 92 to have stepped shape similar to that of the photodetector 93, so as to obtain similar functions and effects as those of the second or third embodiment.

Of course, the photodetector unit 93 may have a stepped shape such that the 2-part photodetector in the middle stage and including the photodetector parts E and F is arranged farther away from the composite prism 27 than the photodetectors in the upper and lower stages of the photodetector unit 93.

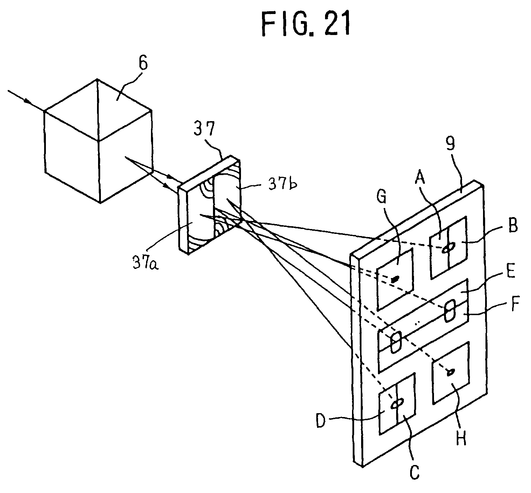

Next, a description will be given of a seventh embodiment of the optical information recording/reproducing apparatus according to the present invention, by referring to FIG.21. In this embodiment, the basic construction of the optical information recording/reproducing apparatus is basically the same as that of the first embodiment shown in FIG.6, but a holographic optical element 37 shown in FIG.21 is used in place of the composite prism 7. FIG.21 shows a perspective view of an important part of this seventh embodiment, and in FIG.21, those parts which are the same as those corresponding parts in FIGS.6 through 8 are designated by the same reference numerals, and a description thereof will be omitted.

FIG.21 shows a state where the light beam output from the Wollaston prism 6 is projected on the photodetector unit 9. The reflected light beam input to the Wollaston prism 6 is separated into two polarized light beams and input to a holographic optical element 37. As shown in FIG.21, the holographic optical element 37 is an optical element having two diffraction surfaces 37a and 37b arranged side by side from to each other. The diffraction surfaces 37a and 37b of the holographic optical element 37 have gratings with sawtooth-shaped cross sections which are provided symmetrically about a center point of the holographic optical element 37. The two polarized light beams input to the holographic optical element 37 are respectively separated mainly into ±1st and 0th order diffracted light beams by the diffraction surfaces 27a and 37b, and a total of six light beams are projected onto the corresponding photodetectors of the photodetector unit 9 via a condenser lens 8. Actually, high order diffracted light beams of ±2nd order or greater are generated from the holographic optical element 37, but the light quantity of the high order diffracted light beams is small and negligible. For the sake of convenience, the illustration of the condenser lens 8 shown in FIG.6 is omitted in FIG.21.

Otherwise, the functions and effects of this embodiment are similar to those of the first embodiment described above, and the focal error signal FES, the tracking error signal TES, the magneto-optic signal MO and the identification signal ID can be obtained based on the formulas described with reference to the first embodiment. Furthermore, this embodiment may employ the photodetector unit 91 or 92 of the second or third embodiment described above, so as to obtain similar functions and effects as those of the second or third embodiment.

In each of the above described embodiments, it is of course possible to arrange the composite prism 7, 47, 17, 27, 135B or the holographic optical element 37, the condenser lens 8, and the analyzer 6 in an arbitrary order. In other words, the analyzer and the composite prism or holographic optical element may be arranged in an arbitrary order in the optical path for directing the reflected light beam from the optical recording medium to the photodetector unit.

Further, the present invention is not limited to these embodiments, but various variations and modifications may be made without departing from the scope of the present invention.

**Claims**

1. An optical information recording/reproducing apparatus which receives by a photodetector via an analyzer and an optical element a reflected light beam of a coherent light beam projected on a recording medium, and detects a focal error signal for controlling a projecting position of the coherent light beam, a tracking error signal, and information for reproducing a optical signal, characterized in that:

said analyzer splits the reflected light beam into two polarized light beams,
said optical element includes a plurality of deflecting parts spatially splitting each of the two split light beams from said analyzer into three light beams,
said photodetector includes light receiving elements which receive six divided light beams deflected via said optical element,
said six divided light beams being used to detect the focal error signal, the tracking error signal, and the optical signal.

2. The optical information recording/reproducing apparatus as claimed in claim 1, characterized in that the divided light beams used to obtain at least one of the focal error signal and the tracking error signal, out of the six divided light beams, are used to obtain the optical signal.

3. The optical information recording/reproducing apparatus as claimed in claim 1, characterized in that one of two divided light beams from one of the deflecting parts having a larger light blocking quantity at remaining ones of the deflecting parts is used to obtain the optical signal.

4. The optical information recording/reproducing apparatus as claimed in claim 1, characterized in that a light receiving element has a division line, and a divided light beam which forms on the light receiving element a beam spot which moves towards one of an outer side and an inner side of said photodetector than the division line depending on an optical characteristic of said analyzer when the light receiving element is located at a position farther away from an in-focus position of the divided light beam is used to obtain the focal error signal.

5. The optical information recording/reproducing apparatus as claimed in claim 1, characterized in that only one of the two polarized light beams split by said analyzer to obtain the focal error signal.

6. The optical information recording/reproducing apparatus as claimed in any of claims 1 to 5, characterized in that said optical element comprises a prism having a curved deflection surface having a convex surface with a curvature with respect to an optical axis of the reflected light beam, and a pair of tapered deflection surfaces provided on both sides of the curved deflection surface and having mutually different tapers with respect to the optical axis.

7. The optical information recording/reproducing apparatus as claimed in any of claims 1 to 5, characterized in that said optical element comprises a prism having a curved deflection surface having a concave surface with a curvature with respect to an optical axis of the reflected light beam, and a pair of tapered deflection surfaces provided on both sides of the curved deflection surface and having mutually different tapers with respect to the optical axis.

8. The optical information recording/reproducing apparatus a claimed in any of claims 1 to 5, characterized in that said optical element comprises a prism having a flat deflection surface having a flat surface which is approximately perpendicular to an optical axis of the reflected light beam, and a pair of tapered deflection surfaces provided on both sides of the flat deflection surface and having mutually different tapers with respect to the optical axis.

9. The optical information recording/reproducing apparatus as claimed in any of claims 1 to 5, characterized in that said optical element comprises a holographic optical element having polarizing parts for diffracting the reflected light beam into ±1st order and 0th order diffracted light beams.

10. An optical information recording/reproducing apparatus which records information on and/or reproduces information from an optical recording medium based on a reflected light beam from the optical recording medium, characterized by:

a light splitting part having a plurality of light splitting stages which split the reflected light beam from the optical recording medium into a plurality of light beams; and
a photodetector unit including n photodetectors which receive m light beams output from a final stage of said light splitting part, where m and n are positive integers satisfying $m \geq n$,
said n photodetectors of said photodetector unit including a plurality of photodetectors which are arranged to receive light beams used to detect a focal error, at least one photodetector which is arranged to receive a light beam used to detect a tracking error, and a plurality of photodetectors which are arranged to receive light beams used to detect optical information recorded on the optical recording medium.

11. The optical information recording/reproducing apparatus as claimed in claim 10, characterized in that the integers m and n are selected to satisfy one of $m = 6$ and $n = 6$, $m = 6$ and $n = 5$, and $m = 10$ and n = 6.

**12.** The optical information recording/reproducing apparatus as claimed in claim 10 or 11, characterized in that said n photodetectors of said photodetector unit include a plurality of photodetectors which are arranged to detect light beams used to detect positional information, said positional information being prerecorded on the optical recording medium and indicating a position on the optical recording medium.

**13.** The optical information recording/reproducing apparatus as claimed in claim 12, characterized in that the plurality of photodetectors which are arranged to receive the light beams used to detect the positional information, out of said n photodetectors of said photodetector unit, are the same as the plurality of photodetectors which are arranged to receive the light beams used to detect the optical information.

**14.** The optical information recording/reproducing apparatus as claimed in claim 12, characterized in that the plurality of photodetectors which are arranged to receive the light beams used to detect the positional information, out of said n photodetectors of said photodetector unit, receive all of the m light beams output from the final stage of said light splitting part.

**15.** The optical information recording/reproducing apparatus as claimed in claim 10, characterized in that the plurality of photodetectors which are arranged to receive the light beams used to detect the optical information, out of said n photodetectors of said photodetector unit, also receive at least one light beams used to detect one of the focal error and the tracking error.

**16.** The optical information recording/reproducing apparatus as claimed in claim 10, characterized in that the plurality of photodetectors which are arranged to receive the light beams used to detect the optical information, out of said n photodetectors of said photodetector unit, receive only a portion of the m light beams output from the final stage of said light splitting part.

**17.** The optical information recording/reproducing apparatus as claimed in claim 10, characterized in that said light splitting part comprises:

an analyzer splitting an incoming light beam into a plurality of polarized light beams; and
an optical element spatially splitting an incoming light beam into a plurality of light beams,
said analyzer and said optical element being arranged in an arbitrary order between the optical recording medium and said photodetector unit,
the plurality of photodetectors which are arranged to receive the light beams used to detect the focal error, out of said n photodetectors of said photodetector unit, receiving only a light beam corresponding to one of the plurality of polarized light beams.

**18.** The optical information recording/reproducing apparatus as claimed in claim 17, characterized in that said optical element comprises:

a first deflection surface having a curvature with respect to an optical axis of the reflected light beam; and
second and third deflection surfaces, provided on both sides of said first deflection surface, tapered in mutually different directions with respect to the optical axis.

**19.** The optical information recording/reproducing apparatus as claimed in claim 18, characterized in that said optical element further comprises:

fourth and fifth deflection surfaces, provided on outer sides of said second and third deflection surfaces, which lie on a curved surface having the same curvature as said first deflection surface which also lies on said curved surface.

**20.** The optical information recording/reproducing apparatus as claimed in claim 18 or 19, characterized in that each of the plurality of photodetectors which are arranged to receive the light beams used to detect the focal error, out of said photodetectors of said photodetector unit, is arranged to receive a light beam output from one of the second and third deflection surfaces of said optical element forming a larger beam spot on the photodetector than a light beam output from the other of the second and third deflection surfaces.

**21.** The optical information recording/reproducing apparatus as claimed in claim 10 or 11, further characterized by:

means for obtaining a first sum of an output of one of the photodetectors which are arranged to receive the light beams used to detect the optical information, out of said n photodetectors of said photodetector unit, and an output of one of the photodetectors which are arranged to receive the light beams used to detect the focal error;
means for obtaining a second sum of an output of another of the photodetectors which are arranged to receive the light beams used to detect the optical information and an output of another of the photodetectors which are arranged to receive the light beams used to detect the focal error; and

means for reproducing the optical information from a difference of the first and second sums.

22. The optical information recording/reproducing apparatus as claimed in claim 10 or 11, further characterized by:

means for obtaining a first sum of an output of one of the photodetectors which are arranged to receive the light beams used to detect the optical information, out of said n photodetectors of said photodetector unit, and an output of one of the photodetectors which are arranged to receive the light beams used to detect the focal error;
means for obtaining a second sum of an output of another of the photodetectors which are arranged to receive the light beams used to detect the optical information and an output of another of the photodetectors which are arranged to receive the light beams used to detect the focal error; and
means for reproducing positional information which is prerecorded on the optical recording medium and indicates a position on the optical recording medium from a sum of the first and second sums.

23. The optical information recording/reproducing apparatus as claimed in claim 10 or 11, further characterized by:

means for reproducing positional information which is prerecorded on the optical recording medium and indicates a position on the optical recording medium from a sum of outputs of all of said n photodetectors of said photodetector unit.

24. The optical information recording/reproducing apparatus as claimed in claim 10 or 11, further characterized by:

means for reproducing the optical information based on outputs of predetermined ones of said plurality of photodetectors which are arranged to receive light beams from said light splitting part, out of said n photodetectors of said photodetector unit, and corresponding to a peripheral portion excluding a central portion of the reflected light beam from the optical recording medium.

25. The optical information recording/reproducing apparatus as claimed in claim 24, further characterized by:

means for reproducing positional information which is prerecorded on the optical recording medium and indicates a position on the optical recording medium from a sum of outputs of all of said n photodetectors of said photodetector unit.

26. The optical information recording/reproducing apparatus as claimed in claim 10, characterized in that:

$m = 6$ and $n = 5$;
the photodetectors which are arranged to receive the light beams used to detect a focal error include 2 2-part photodetectors respectively having photodetector parts A and B and photodetector parts C and D; and
　　which further comprises:
calculating means for calculating a focal error signal FES based on outputs of the photodetector parts by a formula

$$FES = (A+C)-(B+D)$$

where the outputs of the photodetector parts are designated by the same designations as the photodetector parts.

27. The optical information recording/reproducing apparatus as claimed in claim 10, characterized in that:

$m = 6$ and $n = 5$;
the photodetector which is arranged to receive the light beams used to detect a focal error includes 1 2-part photodetector having photodetector parts E and F; and
　　which further comprises:
calculating means for calculating a tracking error signal TES based on outputs of the photodetector parts by a formula

$$TES = E-F$$

where the outputs of the photodetector parts are designated by the same designations as the photodetector parts.

28. The optical information recording/reproducing apparatus as claimed in claim 10, characterized in that:

$m = 6$ and $n = 5$;
the photodetectors which are arranged to receive the light beams used to detect a focal error include 2 2-part photodetectors respectively having photodetector parts A and B and photodetector parts C and D;

the photodetectors which are arranged to receive the light beams used to detect the optical information include 2 photodetector parts G and H; and

which further comprises:

calculating means for calculating an optical signal MO based on outputs of the photodetector parts by one of formulas

$$MO = (A+B+H)-(C+D+G)$$

and

$$MO = (A+B+C+D)-(G+H)$$

where the outputs of the photodetector parts are designated by the same designations as the photodetector parts.

29. The optical information recording/reproducing apparatus as claimed in claim 10, characterized in that:

$m = 6$ and $n = 5$;

the photodetectors which are arranged to receive the light beams used to detect a focal error include 2 2-part photodetectors respectively having photodetector parts A and B and photodetector parts C and D;

the photodetector which is arranged to receive the light beams used to detect a tracking error includes 1 2-part photodetector having photodetector parts E and F;

the photodetectors which are arranged to receive the light beams used to detect the optical information include 2 photodetector parts G and H; and

which further comprises:

calculating means for calculating an identification signal ID based on outputs of the photodetector parts by one of formulas

$$ID = A+B+C+D+G+H$$

and

$$ID = A+B+C+D+E+F+G+H$$

where the outputs of the photodetector parts are designated by the same designations as the photodetector parts.

30. The optical information recording/reproducing apparatus as claimed in claim 10, characterized in that:

$m = 6$ and $n = 6$;

the photodetectors which are arranged to receive the light beams used to detect a focal error include 2 2-part photodetectors respectively having photodetector parts E1 and F1 and photodetector parts E2 and F2; and

which further comprises:

calculating means for calculating a tracking error signal TES based on outputs of the photodetector parts by a formula

$$TES = (E1+E2)-(F1+F2)$$

where the outputs of the photodetector parts are designated by the same designations as the photodetector parts.

31. The optical information recording/reproducing apparatus as claimed in claim 10, characterized in that:

$m = 6$ and $n = 6$;

the photodetectors which are arranged to receive the light beams used to detect a focal error include 2 2-part photodetectors respectively having photodetector parts A and B and photodetector parts C and D;

the photodetectors which are arranged to receive the light beams used to detect a focal error include 2 2-part photodetectors respectively having photodetector parts E1 and F1 and photodetector parts E2 and F2;

the photodetectors which are arranged to receive the light beams used to detect the optical information include 2 photodetector parts G and H; and

which further comprises:

calculating means for calculating an optical signal MO based on outputs of the photodetector parts by one of formulas

$$MO = (E1+F1+G)-(E2+F2+H)$$

and

$$MO = (A+B+E2+F2+H)-(C+D+E1+F1+G)$$

where the outputs of the photodetector parts are designated by the same designations as the photodetector parts.

32. The optical information recording/reproducing apparatus as claimed in claim 10, characterized in that:

$m = 6$ and $n = 6$;

the photodetectors which are arranged to receive the light beams used to detect a focal error include 2 2-part photodetectors respectively having photodetector parts A and B and photodetector parts C and D;

the photodetectors which are arranged to receive the light beams used to detect a focal error include 2 2-part photodetectors respectively having photodetector parts E1 and F1 and photodetector parts E2 and F2;

the photodetectors which are arranged to receive the light beams used to detect the optical information include 2 photodetector parts G and H; and

which further comprises:

calculating means for calculating an identification signal ID based on outputs of the photodetector parts by one of formulas

$$ID = E1+F1+G+E2+F2+H$$

and

$$ID = A+B+C+D+E1+E2+F1+F2+G+H$$

where the outputs of the photodetector parts are designated by the same designations as the photodetector parts.

33. The optical information recording/reproducing apparatus as claimed in claim 10, characterized in that:

$m = 10$ and $n = 6$;
the photodetectors which are arranged to receive the light beams used to detect a focal error include 2 2-part photodetectors respectively having photodetector parts A and B and photodetector parts C and D; and

which further comprises:

calculating means for calculating a focal error signal FES based on outputs of the photodetector parts by a formula

$$FES = (A+C)-(B+D)$$

where the outputs of the photodetector parts are designated by the same designations as the photodetector parts.

34. The optical information recording/reproducing apparatus as claimed in claim 10, characterized in that:

$m = 10$ and $n = 6$;
the photodetectors which are arranged to receive the light beams used to detect a focal error include 2 2-part photodetectors respectively having photodetector parts E1 and F1 and photodetector parts E2 and F2; and

which further comprises:

calculating means for calculating a tracking error signal TES based on outputs of the photodetector parts by a formula

$$TES = (E1+E2)-(F1+F2)$$

where the outputs of the photodetector parts are designated by the same designations as the photodetector parts.

35. The optical information recording/reproducing apparatus as claimed in claim 10, characterized in that:

$m = 10$ and $n = 6$;
the photodetectors which are arranged to receive the light beams used to detect a focal error include 2 2-part photodetectors respectively having photodetector parts E1 and F1 and photodetector parts E2 and F2; and

which further comprises:

calculating means for calculating an optical signal MO based on outputs of the photodetector parts by a formula

$$MO = (E1+F1)-(E2+F2)$$

where the outputs of the photodetector parts are designated by the same designations as the photodetector parts.

36. The optical information recording/reproducing apparatus as claimed in claim 10, characterized in that:

$m = 10$ and $n = 6$;
the photodetectors which are arranged to receive the light beams used to detect a focal error include 2 2-part photodetectors respectively having photodetector parts A and B and photodetector parts C and D;

the photodetectors which are arranged to receive the light beams used to detect a focal error include 2 2-part photodetectors respectively having photodetector parts E1 and F1 and photodetector parts E2 and F2;

the photodetectors which are arranged to receive the light beams used to detect the optical information include 2 photodetector parts G and H; and

which further comprises:

calculating means for calculating an identification signal ID based on outputs of the photodetector parts by one of formulas

ID = E1+F1+E2+F2

and

ID = A+B+C+D+E1+E2+F1+F2+G+H

where the outputs of the photodetector parts are designated by the same designations as the photodetector parts.

# FIG. 1

# FIG. 2

# FIG. 3

# FIG. 4

FIG. 5A

FIG. 5B

FIG. 5C

# FIG. 6

FIG. 7

# FIG. 8

# FIG. 9

# FIG. 10

FIG. 11A

FIG. 11B

FIG. 11C

# FIG. 12

# FIG. 13

## FIG. 14

## FIG. 15

# FIG. 16

# FIG. 17

# FIG. 18

EP 0 910 070 A2

# FIG. 19

# FIG. 20

# FIG. 21

# FIG. 22

A
C
501
+
+
502
B
D
+
+
503
+
−
FES

# FIG. 23

E
F
511
+
−
TES

# FIG. 24

A
B
H
521
+
+
+
C
D
G
522
+
+
+
523
+
−
MO

# FIG. 25

A
B
H

+
+
+

601

C
D
G

+
+
+

602

+
+

603

I D

# FIG. 26

A
B
C
D
E
F
G
H

+
+
+
+
+
+
+
+

611

I D

# FIG. 27

A A
C

+
+

531

B B
D

+
+

532

+
−

533

F E S

# FIG. 28

E —
F —  $\triangleright$ 541  —— T E S

# FIG. 29

A A —
B B —
C D —  $\triangleright$ 551

G —
H —  $\triangleright$ 552

 $\triangleright$ 553  —— M O

# FIG. 30

A A —
B B —
C D —  $\triangleright$ 621

G —
H —  $\triangleright$ 622

 $\triangleright$ 623  —— I D

# FIG. 31

# FIG. 32

# FIG. 33

# F I G. 34

E₁
F₁ ———— [581] +++
G

E₂
F₂ ———— [582] +++
H

[583] +/− ———— MO

# F I G. 35

E₁
F₁ ———— [641] +++
G

E₂
F₂ ———— [642] +++
H

[643] ++ ———— I D

# F I G. 36

A
B
C
D
E₁
E₂
F₁
F₂
G
H

[651] ++++++++++ ———— I D

# FIG. 37

A
B
E₂
F₂
H

591

C
D
E₁
F₁
G

592

593

MO

# FIG. 38

A
B
E₂
F₂
H

661

C
D
E₁
F₁
G

662

663

ID